(19) Europäisches Patentamt
European Patent Office
Office européen des brevets

(11) Numéro de publication: **0 130 927**
**B1**

# (12) FASCICULE DE BREVET EUROPÉEN

(45) Date de publication du fascicule du brevet: **12.08.87**

(51) Int. Cl.⁴: **C 08 G 69/40**, C 08 G 69/34

(21) Numéro de dépôt: **84420106.1**

(22) Date de dépôt: **21.06.84**

(54) **Copolyétheramides techniques souples à basse température.**

(30) Priorité: **28.06.83 FR 8310939**

(43) Date de publication de la demande: **09.01.85 Bulletin 85/2**

(45) Mention de la délivrance du brevet: **12.08.87 Bulletin 87/33**

(84) Etats contractants désignés: **AT BE CH DE FR GB IT LI LU NL SE**

(56) Documents cité:
**EP-A-0 061 118**
**DE-A-1 520 937**
**FR-A-1 542 431**
**FR-E-94 402**
**US-A-4 122 229**

**RAPRA ABSTRACTS, vol. 10, no. 34, 20 août 1973, résumé no. 14694L; S.W. SHALABY et al.: "Nylon 12-polyoxybutylene block copolymers"**

(73) Titulaire: **RHONE- POULENC SPECIALITES CHIMIQUES, "Les Miroirs" 18, Avenue d'Alsace, F-92400 Courbevoie (FR)**

(72) Inventeur: **Coquard, Jean, Route du Crest, F-69290 Grezieu- la- Varenne (FR)**
Inventeur: **Goletto, Jean, "Le Joli Mai" 2, rue Tramier, F-69130 Ecully (FR)**

(74) Mandataire: **Trolliet, Maurice, RHONE- POULENC INTERSERVICES Service Brevets Chimie Centre de Recherches de Saint- Fons B.P. 62, F-69192 Saint- Fons Cédex (FR)**

EP 0 130 927 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention concerne de nouveaux copolyétheramides homogènes, à structure bloc, présentant notamment une cristallinité élevée de manière à offrir de hauts points de fusion et une bonne résistance thermo-mécanique, une température de transition vitreuse aussi basse que possible de manière à avoir une souplesse et une élasticité importantes à des températures aussi basses que celles égales ou inférieures à -20°C et une viscosité à l'état fondu élevée compatible avec une utilisation aisée dans les domaines du moulage par injection et de l'extrusion.

Dans le brevet français n° 1 542 431 on décrit déjà des copolyéthéramides élastiques obtenus à partir d'un acide aminé ou d'un lactame, d'un diacide carboxylique à chaîne courte, d'une polyétherdiamine et éventuellement d'une diamine aliphatique à chaîne courte. Les polymères obtenus ne doivent pas présenter cependant une viscosité à l'état fondu élevée leur conférant par exemple une excellente aptitude au moulage par injection. De plus, ces polymères peuvent être fragiles.

Il a été encore décrit dans le brevet américain n° 4 218 351 des élastomères thermoplastiques constitués par des copolyétheramides. Dans cet art antérieur, on propose une famille générale de copolyétheramides qui sont obtenus par réaction directe de trois types de constituants possèdant chacun des groupes fonctionnels capables de participer à une réaction donnant naissance à des fonctions amides. Le premier constituant (i) est pris dans le groupe formé par un diacide carboxylique à chaîne courte, une diamine à chaîne courte, un lactame à chaîne courte, un aminoacide à chaîne courte et un mélange de deux ou de plus de deux de ces espèces entre elles; le second constituant (ii) est un dimère d'acide gras ou un dérivé aminé de dimère d'acide gras; le troisième constituant (iii) est une polyoxyalkylènediamine ou un acide polyoxyalkylènedicarboxylique. Les constituants entrant en réaction sont choisis de manière à apporter dans le milieu des quantités sensiblement équivalentes de groupes $NH_2$ et COOH. On note, à la lecture des exemples du brevet précité, que les copolyétheramides qui sont effectivement préparés sont obtenus essentiellement par réaction (i) d'un mélange d'un diacide à chaîne courte et d'une diamine; chaîne courte ou d'un mélange d'un lactame et d'un diacide à chaîne courte ou d'une diamine à chaîne courte avec un réactif de type (ii) et un réactif de type (iii). Les copolyétheramides ainsi préparés présentent des propriétés intéressantes, notamment la souplesse à basse température qui est responsable des bonnes propriétés de résilience annoncées. Cependant leur faible viscosité à l'état fondu, qui est généralement inférieure à 10 Pa s à 232°C, ne permet de les utiliser que comme adhésifs. Or on a besoin dans les domaines du moulage et de l'extrusion des matières plastiques, de produits présentant une viscosité à l'état fondu suffisamment élevée pour pouvoir être injectés ou être extrudés de façon convenable. On ne trouve pas décrit dans l'art antérieur des moyens permettant d'obtenir, au départ des mélanges réactionnels conformes à l'enseignement du brevet américain précité, des copolyétheramides possèdant une viscosité à l'état fondu suffisamment élevée pour pouvoir être utilisés comme plastiques techniques.

Il a maintenant été trouvé, et c'est ce qui constitue l'objet de la présente invention, des copolyétheramides à structure bloc ayant notamment des points de fusion élevés, une souplesse et une élasticité importantes jusqu'à des températures aussi basses que celles égales ou inférieures à -20°C et une viscosité à l'état fondu élevée.

Plus spécifiquement, la présente invention concerne des copolyétheramides homogènes, à structure bloc, présentant notamment un point de fusion ou de ramollissement au moins égal à 170°C, une température de transition vitreuse mesurée à EHO au plus égale à -5°C et une viscosité à l'état fondu, mesurée dans les conditions définies ci-après, au moins égale à 500 poises, les dits copolyétheramides étant caractérisés en ce qu'ils sont susceptibles d'être obtenus conformément au mode opératoire défini par les points suivants:

. on mélange un lactame ayant de 4 à 12 atomes de carbone avec une solution d'un sel de dimère d'acide gras et de polyoxyalkylènediamine dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame;

. la stoechiométrie dudit sel ayant été établie au préalable en mesurant le pH de la solution du sel dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à $\pm 0{,}05$ unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée;

. puis on ajoute dans le mélange réactionnel une petite quantité d'un additif consistant dans un oxyacide minéral ou dans un oxyacide organique autre qu'un acide carboxylique, dont l'une au moins des fonctions acides, quand il y en a plusieurs, possède une constante d'ionisation pKa dans l'eau à 25°C égale ou inférieure à 4 et on soumet ensuite l'ensemble à un chauffage pour faire réagir le lactame avec le sel.

La viscosité à l'état fondu est mesurée à 230°C, sous un gradient de cisaillement de $10 s^{-1}$, à l'aide d'un rhéomètre Davenport dans le cas des copolyétheramides obtenus à partir de lactames ayant 6 à 12 atomes de carbone; dans le cas des copolyétheramides obtenus à partir de lactames ayant 4 à 5 atomes de carbone, la viscosité à l'état fondu est mesurée comme indiqué ci-avant, mais à 260°C.

A titre d'illustration des lactames qui peuvent convenir pour la mise en oeuvre de la présente invention, on citera: le γ-butyrolactame, le δ-amylolactame, l' ε-caprolactame, l'enantholactame, le capryllactame, l'azacycloundécanone-2, l'azacyclododécanone-2, le laurolactame. Le lactame auquel on fait appel de préférence est l' ε -caprolactame; le réactif utilisé possède alors les mêmes caractéristiques que celles du réactif mis en oeuvre pour l'obtention industrielle du polycaprolactame ou nylon 6.

Les acides dimères employés sont obtenus par polymérisation de composés comprenant 80 % à 100 % en poids d'acide(s) gras monomère(s) ayant de 16 à 20 atomes de carbone et 20 % à 0 % en poids d'acide(s) gras monomère(s) ayant de 8 à 15 atomes de carbone et/ou de 21 à 24 atomes de carbone. Par acides gras monomères, on entend désigner des monoacides aliphatiques saturés ou insaturés, linéaires ou ramifiés.

Parmi les acide gras monomères saturés linéaires ou ramifiés, on peut citer: les acides caprylique, pélargonique, caprique, laurique, myristique, palmitique et isopalmitique, stéarique, arachidique, behénique et lignocérique.

Parmi les acides gras monomères à insaturation(s) éthylènique(s) linéaires ou ramifiés on peut citer: les acides 3-octénoïque, 11-dodécénoïque, oléique, lauroléique, myristoléique, palmitoléique, gadoléique, cétoléique, linoléique, linolénique, eicosatétraenoïue et chaulmoogrique. Certains acides à insaturation acétylénique peuvent aussi conduire à des acides polymères, mais ils n'existent pas de façon intéressante à l'état naturel et de ce fait leur intérêt économique est trés faible.

Les acides gras polymères obtenus par polymérisation à la chaleur, en présence éventuellement de catalyseurs comme des peroxydes ou des acides de Lewis, peuvent être fractionnés par exemple par des techniques classiques de distillation sous vide ou d'extraction par des solvants. On peut aussi les hydrogéner pour réduire leur taux d'insaturation et ainsi réduire leur coloration.

Les acides dimères utilisés de préférence dans la présente invention sont des acides gras polymères fractionnés dans lesquels la fraction en acide difonctionnel est supérieure à 94 % en poids, la fraction en acide monofonctionnel est inférieure à 1 % en poids et plus préférentiellement encore égale ou inférieure à 0,5 % en poids, la fraction en acide de fonctionnalité supérieure à 2 est inférieure à 5 % en poids et plus préférentiellement encore égale ou inférieure à 3 % en poids.

Les acides dimères utilisés plus préférentiellement encore sont les espèces obtenues par fractionnement (conduisant aux fractions indiquées ci-avant) d'acides gras polymères ayant subi en plus une hydrogénation.

Les acides dimères qui conviennent tout spécialement bien sont les espèces obtenues par fractionnement d'une composition hydrogénée issue de la polymérisation catalytique d'acide(s) gras monomère(s) ayant 18 atomes de carbone. Dans ce contexte, en raison de leur facilité d'approvisionnement et de leur polymérisation relativement aisée, les acides oléique, linoléique et linolénique, pris seuls ou deux à deux ou de préférence sous forme de mélange ternaire, sont les produits de départ tout particulièrement préférés pour la préparation des acides gras polymères.

Les autres réactifs mis en oeuvre dans la présente invention consistent dans des polyoxyalkylènediamines. Ces composés peuvent être représentés par la formule générale:

$H_2N - R_1 - (OR_2)_n - OR_3 - NH_2$ (I)

dans laquelle les symboles $R_1$, $R_2$, $R_3$, identiques ou différents, représentent des radicaux aliphatiques saturés divalents, linéaires ou ramifiés, comportant de 1 à 10 atomes de carbone et le symbole n est un nombre déterminé de manière à procurer une masse moléculaire allant de 100 à 10 000 et, de préférence, allant de 300 à 5 000.

A titre d'illustration de polyoxyalkylénediamines qui conviennent bien, on citera par exemple les composés de formule (I) dans laquelle:

. $R_1 = R_2 = R_3 = -\underset{|}{CH}(CH_3) - CH_2 -$ et n = 5,6 : polyoxypropylène-diamine de masse moléculaire égale à 455 ;

. $R_1 = R_2 = R_3 = -\underset{|}{CH}(CH_3) - CH_2 -$ et n = 33,3 : polyoxypropylènediamine de masse moléculaire égale à 2065 ;

. $R_1 = R_3 = -\underset{|}{CH}(CH_3) - CH_2 -$, $R_2 = - CH_2 - CH_2 -$ et n = 50,5 : polyoxyéthylènediamine de masse moléculaire égale à 2355 ;

. $R_1 = R_3 = -\underset{|}{CH}(CH_3) - CH_2 -$, $R_2 = - CH_2 - CH_2 - CH_2 - CH_2 -$ et n = 34: polyoxytétraméthylènediamine de masse moléculaire égale à 2585;

Il est bien entendu possible de mettre en oeuvre, sans sortir pour autant du cadre de l'invention, un mélange de deux ou de plus de deux polyoxyalkylènediamines.

Le procédé de préparation des copolyétheramides conformes à la présente invention consiste à réaliser dans

un premier temps une solution dans un milieu de dissolution approprié d'un sel de dimère d'acide gras et de polyoxyalkylènediamine dont on contrôlera et règlera la stoechiométrie par pH métrie avant de l'engager dans la réaction de polycondensation avec le lactame en présence de l'additif acide.

Comme il l'a été mentionné ci-avant, le milieu de dissolution du sel considéré peut être constitué par un mélange eau-alcool (a), par un mélange eau-alcool-lactame (b), par du lactame fondu (c) ou encore, quand le lactame choisi est soluble dans l'eau, par un mélange eau-lactame (d). Le lactame qui peut être employé alors est avantageusement le même que celui choisi comme réactif de polycondensation. S'agissant de la teneur en eau des milieux de dissolution (a) et (d) et de la concentration du sel dans les milieux (a), (c) et (d), il convient de se reporter aux indications données par la demanderesse dans le brevet français n° 2 407 227, aux pages 2 et 3; la substance de ce document est incorporée ici en référence. On fera noter que de petites variations par rapport à l'enseignement de cet art antérieur peuvent intervenir au niveau de la définition des bornes entre lesquelles se situent les valeurs de la teneur en eau des milieux de dissolution et de la concentration du sel; ces petites variations sont à mettre sur le compte du fait que, dans la présente invention, d'une part le sel est préparé à partir d'une polyoxyalkylènediamine alors que dans l'art antérieur considéré le sel est préparé à partir d'hexaméthylènediamine et d'autre part on peut mettre en oeuvre présentement un autre lactame que le caprolactame visé dans cette référence. L'homme de l'art pourra cependant déterminer aisément ces petites variations à l'aide d'essais simples à sa portée immédiate. propos du milieu de dissolution (b), bien qu'il n'ait pas été décrit dans le brevet français précité, sa composition peut être là encore aisément déterminée à la lumière de l'enseignement de ce document.

S'agissant de la manière d'ajuster la stoechiométrie des solutions du sel, il convient de se reporter également à l'enseignement du brevet français n° 2 407 227. Comme il est indiqué dans ce document à la page 3, les mélanges solvants, servant à diluer la solution du sel en vue de procéder aux mesures du pH, qui sont préférés, sont des mélanges binaires comme par exemple des mélanges eau-alcool, eau-diol ou eau-lactame (soluble dans l'eau), mais il est aussi possible d'utiliser des mélanges ternaires comme par exemple des mélanges eau-alcool-lactame ou eau-diol-lactame, en particulier dans le cas où le lactame choisi est insoluble dans l'eau. A propos de la composition des mélanges diluants utilisables, elle est la même que celle indiquée dans l'art antérieur considéré, avec éventuellement l'apparition de petites variations touchant à la définition des bornes entre lesquelles se situent les proportions respectives de chaque constituant de ces mélanges diluants, ces petites variations étant liées comme indiqué ci-avant à la mise en oeuvre d'un sel de nature différente et le cas échéant à l'emploi d'un autre lactame que le caprolactame et pouvant être déterminées aisément par l'homme de l'art à l'aide d'essais simples.

Lorsque le réactif de type lactame mis en oeuvre est de l' ε-caprolactame, et ceci correspond comme il a été dit ci-avant à une mise en oeuvre préférentielle de la présente invention, un milieu de dissolution qui est particulièrement recommandé pour la réalisation de la solution du sel de dimère d'acide gras et de polyoxyalkylènediamine consiste dans des mélanges eau- ε caprolactame ayant une teneur en eau comprise entre 40 et 80 % en poids; s'agissant de la détermination du pH de la solution de sel, elle est effectuée de manière très préférentielle dans des mélanges diluants eau-isopropanol ayant une teneur en eau comprise entre 20 et 60 % en poids.

La solution du sel, dont la stoechiométrie a été rigoureusement contrôlée et règlée, est mélangée avec une quantité adéquate de lactame et avec une petite quantité d'un acide fort, puis on procède à la polycondensation des divers monomères engagés (lactame, acide dimère et diamine à ponts éther sous forme de sel).

Comme acides forts qui conviennent on peut citer par exemple: parmi les oxyacides minéraux, les acides sulfureux, sulfurique, hypophosphoreux, phosphoreux, orthophosphorique ou pyrophosphorique; parmi les oxyacides organiques, les acides organosulfoniques, en particulier les acides méthanesulfonique, paratoluènesulfonique ou naphtalènesulfonique ou les acides organophosphoniques, en particulier les acides monoalkyl- ou monoarylphosphoniques tels que les acides méthylphosphonique ou benzènephosphonique.

On préfère utiliser comme acide fort, les acides dérivés du phosphore et plus particulièrement les acides hypophosphoreux, phosphoreux, orthophosphorique, pyrophosphorique, méthylphosphonique ou benrènephosphonique.

Les proportions d'acide fort, exprimées en pourcentage en poids par rapport au copolyétheramide final, sont comprises généralement entre 0,01 et 1 % et de préférence entre 0,01 et 0,5 %.

La polycondensation des divers monomères engagés est réalisée d'abord en portant progressivement la température du mélange réactionnel entre 130°C et 280°C en opérant sous pression atmosphérique et en assurant une distillation régulière de l'eau de polycondensation ainsi que, le cas échéant, de l'eau et éventuellement de l'alcool entrant dans la constitution du milieu de dissoluion du sel. La polycondensation est poursuivie en maintenant, après distillation, la masse fondue aux températures précitées pendant une durée qui peut varier d'environ 15 minutes à environ 2 heures. La polycondensation est achevée en établissant ensuite une pression réduite de manière à atteindre progressivement une valeur inférieure à $200.10^2$ Pa et en maintenant le milieu de polycondensation aux températures précitées pendant une durée qui peut varier d'environ 15 minutes à environ 2 heures; cette dernière étape sous pression réduite présente l'avantage de permettre d'éliminer une grande partie des monomères non polycondensés.

Les copolyétheramides selon la présente invention peuvent bien entendu être modifiés par l'ajout, par exemple dans leur milieu de préparation, d'un ou plusieurs additifs tels que notamment: des stabilisants et des inhibiteurs de dégradation par oxydation, par l'ultraviolet, par la lumière ou par la chaleur; des lubrifiants; des

matières colorantes; des agents de nucléation; des agents anti-mousse; etc...

Dans les copolyétheramides selon la présente invention, la cristallinité et par conséquent la cohésion et la faculté d'obtenir des points de fusion élevés et de bonnes propriétés thermo-mécaniques sont essentiellement apportées par les blocs amides; par bloc amide on entend désigner l'enchaînement des segments de formule (II) qui dérivent du lactame engagé par ouverture du cycle:

- NH - A - CO - (II)

A représentant la chaîne hydrocarbonée du lactame. La possibilité d'obtenir une Tg aussi basse que possible et par conséquent la faculté d'avoir une souplesse et une élasticité importantes sont essentiellement apportées per les blocs éthers; par bloc éther on entend désigner l'enchaînement des segments de formule (III) qui dérivent de la condensation d'une molécule de polyoxyalkylènediamine sur une molécule d'acide dimère:

- HN - B - NH - CO - D - CO - (III)

B et D représentant les restes organiques reliant les groupes fonctionnels de la polyoxyalkylènediamine et de l'acide dimère.

En modifiant les proportions respectives des blocs amides et des blocs éthers dans le copolyétheramide final, on peut faire varier dans de larges limites la souplesse et l'élasticité du polymère obtenu. Un bon compromis en matière de cristallinité, de souplesse et d'élasticité peut être trouvé pour des proportions pondérales de blocs amides dans le polymère final comprises entre 15 et 85 % et de préférence entre 40 et 60 % et pour des proportions pondérales de blocs éthers comprises entre 85 et 15 % et de préférence entre 60 et 40 %. Les quantités de réactifs mis en oeuvre (lactame et sel de dimère d'acide gras et de polyoxyalkylènediamine) sont bien entendu déterminées de manière à obtenir un copolyétheramide présentant de pareilles proportions pondérales de blocs amides et de blocs éthers; pour le calcul de ces proportions pondérales, on considère que les blocs amides dérivent directement du lactame de départ et que les blocs éthers dérivent du sel d'acide dimère et de diamine à ponts éthers engagé par perte de deux molécules d'eau.

On a trouvé, et cela de manière totalement inattendue, que pour avoir à la fois le bon compromis dont on vient de parler et des viscosités à l'état fondu élevées, il est obligatoire de conduire la polycondensation en présence de l'additif acide qui a été défini ci-avant dans le présent mémoire.

En définitive, les copolyétheramides obtenus présentent une bonne résistance thermo-mécanique due à leurs points de fusion élevés allant de 170°C à environ 240°C. Ils possèdent une Tg, mesurée à EHO, qui peut atteindre des valeurs inférieures à -50°C, ce qui leur confère une souplesse et une élasticité (pouvant être réglées en jouant sur les proportions de blocs éthers) qui peuvent être maintenues à des températures aussi basses que celles comprises entre -20°C et -40°C. Leur viscosité élevée à l'état fondu, mesurée dans les conditions définies ci-avant, allant de 50 Pa s à 500 Pa s et même davantage, leur confère aussi une excellente aptitude au moulage par injection et à l'extrusion, ainsi que des caractéristiques mécaniques à la rupture en traction élevées. On constate par ailleurs que les copolyétheramides obtenus présentent une bonne résistance à l'eau. Etant parfaitement homogénes, ils présentent de plus de bonnes propriétés de transparence. Diverses applications faisant appel aux qualités spécifiques de ces copolyétheramides peuvent être envisagées dans des domaines aussi variés que les industries mécaniques, le bâtiment, l'industrie automobile, l'électroménager.

Les exemples qui suivent illustrent de manière non limitative comment la présente invention peut être mise en pratique.

Dans ces exemples un certain nombre de contrôles sont effectués. De même, diverses propriétés sont mesurées. On indique ci-après les modes opératoires et/ou les normes selon lesquelles ces contrôles et mesures sont effectués.

- <u>Détermination du pH des solutions de sel</u>:

Les mesures de pH sont effectuées à 20°C à l'aide d'un pH métre dénommé Radiometer PHM 62 étalonné au centième d'unité pH.

- <u>Analyse microcalorimétrique</u>:

On caractérise les polymères par les caractéristiques de fusion telles que les endothermes de fusion Ef et les exothermes de cristallisation Ec.

Ces déterminations sont effectuées sur un échantillon soumis à des variations de température tant en montée qu'en descente de 10°C/min. On détermine ainsi une courbe par microcalorimétrie différentielle sur laquelle on peut repérer les points de fusion (Tf) et de cristallisation au refroidissement (Tc).

- <u>Transition vitreuse</u>:

La température de transition vitreuse (Tg) correspond à la chute brutale du module de cisaillement en fonction de la température. Elle peut être déterminée sur le graphique représentant les variations du module de torsion en fonction de la température, variations mesurées par analyse thermomécanique au pendule de torsion automatique.

- <u>Module de cisaillement en torsion</u>:

Il est déterminé à deux températures: à -20°C et à +20°C au pendule automatique de torsion sous une fréquence de l'ordre de 1 Hertz selon la norme ISO R 537. Les éprouvettes sont conditionnées à EHO, c'est à dire qu'elles sont placées en dessicateur sur silicagel et séchées 24 heures à température ambiante sous 0,66 - $1,33.10^2$ Pa avant de réaliser les mesures. Les résultats sont exprimés en MPa.

- <u>Détermination des caractéristiques mécaniques en traction</u>:

Elles sont déterminées à 25°C sur des éprouvettes conditionnées à EHO du type H3 de 2mm d'épaisseur, selon la norme NF T 51 034 (vitesse de traction de 10mm/min sur dynamomètre de type Instron).

- <u>Résistance à l'eau</u>:

On détermine la reprise d'eau à 25° C d'éprouvettes de 2mm d'épaisseur, du type de celles utilisées pour les essais de traction, après une immersion de 24 heures dans l'eau. Les résultats expriment la variation en % par rapport au poids initial.

Dans les exemples qui suivent, s'agissant de l'acide dimère mis en oeuvre, on fait appel à un composé mis dans le commerce par la Société Unichema Chemie sous la marque déposée Pripol 1010 dans lequel la fraction en acide difonctionnel est supérieure à 95 % en poids. Cette fraction en acide difonctionnel consiste en un mélange d'isoméres ayant 36 atomes de carbone dont l'espèce prépondérante est un composé saturé de formule:

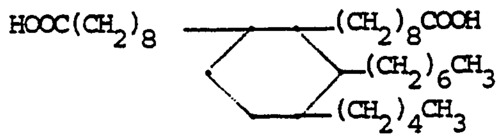

La fraction en acide monofonctionnel (dont le taux pondéral sera précisée ultérieurement) est constituée essentiellement par de l'acide oléique; quant à la fraction en acide de fonctionnalité supérieure à 2 (dont le taux pondéral sera précisé également ultérieurement), elle est constituée essentiellement par un mélange de trimères isomères ayant 54 atomes de carbone; la masse moléculaire moyenne de cet acide dimère est de l'ordre de 565.

EXEMPLE 1

1) Préparation du sel d'une polyoxypropylènediamine de masse moléculaire égale à 2065 et du dimère d'acide gras en solution à 33,33 % en poids dans le mélange eau/caprolactame 50/50 (en poids):

Dans un ballon en verre de 10 litres muni d'un agitateur hélice (trois pales; vitesse de rotation: 100 tours/minute), d'une ampoule d'addition et pouvant travailler sous atmosphère d'azote, sont chargés sous agitition:

- eau permutée: 1517,5 g
- caprolactame pur: 1517,5 g
- polyoxypropylènediamine de masse moléculaire égale à 2065 commercialisée par la Société BASF sous la dénomination Etherdiamine 2000: 1178 g.

Le mélange est homogénéisé durant environ une heure et le volume libre du ballon est purgé par de l'azote.

On introduit dans la solution agitée, par coulée régulière en 30 minutes environ, 339,5 g de dimère d'acide gras commercialisé sous la marque déposée Pripol 1010 par la Société Unichema Chemie ayant un taux de monomère de 0,03 % et un taux de trimère de 3 %. La solution est homogénéisée durant 30 minutes.

On effectue un petit prélèvement d'environ 10 $cm^3$ que l'on dilue par un mélange eau/isopropanol (42,85/57,15 en poids) de façon à amener la concentration du sel de l'acide dimère et de la polyoxypropylènediamine à 10 % en poids. La valeur du pH à 20° C de cette solution diluée est inférieure à celle du pH au point d'équivalence.

Dans la solution concentrée, on introduit 18,6 g d'une solution de la polyoxypropylènediamine à 33,33 % en poids dans un mélange eau/caprolactame (50/50 en poids). La solution est homogénéisée durant 30 minutes, puis on effectue à nouveau une mesure du pH en solution diluée à 10 % en sel comme précédemment. La valeur du pH de la solution diluée atteint, à plus ou moins cinq centièmes d'unité pH, celle du pH au point d'équivalence.

La solution concentrée, ainsi ajustée, est conservée à 25° C sous atmosphère d'azote.

2) Préparation d'un copolyétheramide caprolactame/acide dimère - polyoxypropylènediamine de masse moléculaire 2065, de composition pondérale voisine de 50/50 (blocs amides/blocs éthers):

L'appareillage est constitué par un autoclave de 7,5 litres muni:

- d'un système de chauffage par fluide caloporteur,
- d'un agitateur ruban hélicoïdal (vitesse 60 tours/minute)
- d'un système permettant la mise sous pression d'azote,
- d'un circuit permettant de condenser et de recueillir les produits volatils.

Dans l'autoclave préchauffé à 75 °C on introduit:

- solution de sel de l'acide dimère et de la polyoxypropylènediamine de masse moléculaire 2065 à 33,33 % en poids dans le mélange eau/caprolactame 50/50 (en poids) de l'exemple 1, partie 1): 4500 g
- solution aqueuse de caprolactame à 60 % en poids: 1175 g
- antioxydant commercialisé sous la marque déposée Irganox 1010 par la Société Ciba Geigy: 15 g
- acide hypophosphoreux en solution aqueuse à 50 % en poids:3 g
- antimousse silicone: 0,5 $cm^3$.

On laisse homogénéiser la masse durant 15 minutes et on effectue trois purges à l'azote par mise sous pression de $3.10^5$ Pa, puis décompression. La température de la masse en agitation est élevée progressivement en 90 minutes environ jusqu'à 150°C tout en assurant une distillation réguliére de l'eau. On maintient la température de la masse vers 150° C jusqu'à ce que le poids de distillat atteigne environ 1875 g.

On élève ensuite régulièrement la température de la masse à 250°C en 45 minutes. La température de la masse agitée dans l'autoclave est encore élevée progressivement en une heure jusqu'à 260°.

On établit alors en 40 minutes environ, progressivement, une pression de $79,8.10^2$ Pa tout en maintenant la masse en homogénéisatio à 250°-260°C. La masse est homogénéisée durant une heure sous cette pression

réduite à une température de 260°-265°C. Durant la phase de réaction sous pression réduite, on recueille par distillation 621 g de caprolactame.

L'agitation est arrêtée, puis on établit dans l'autoclave une pression d'azote de $5.10^5$ Pa et on soutire le polymère. Ce dernier, extrudé de l'autoclave sous forme de jonc, est refroidi par passage dans un bain d'eau froide, puis il est granulé et séché.

Le polymère obtenu est transparent, légèrement opalescent.

Il présente les caractéristiques suivantes mesurées sur les granulés secs:

- Point de fusion (Tf): 214°C
- Point de cristallisation au refroidissement (Tc): 156°C
- Viscosité à l'état fondu à 230°C sous un gradient de cisaillement $\gamma = 10\ s^{-1}$: 2500 poises

Les caractéristiques physiques et mécaniques mesurées sur éprouvettes moulées par injection et conditionnées sont les suivantes:

- Reprise d'eau à 25°C: 4 %
- Température de transition vitreuse à EHO: - 68°C
- Module en torsion à EHO:

à + 20°C: 90 MPa

à - 20°C: 170 MPa

- Caractéristiques mécaniques en traction à EHO et à 25°C:

. Contrainte au seuil d'écoulement: 13,5 MPa

. Allongement au seuil d'écoulement: 16,5 %

. Contrainte à la rupture: 40,2 MPa

. Allongement à la rupture: 580 %

. Module d'élasticité: 72 MPa

EXEMPLE 2

1) Préparation d'un sel d'une polyoxyéthylènediamine de masse moléculaire égale à 2355 et du dimère d'acide gras en solution à 53,33 % en poids dans le mélange eau/caprolactame 71,43/28,57 (en poids):

Dans l'appareillage décrit à l'exemple 1, sont chargés sous agitation:

- eau permutée: 1531 g
- caprolactame pur: 612,5 g
- polyoxyéthylènediamine de masse moléculaire égale à 2355 commercialisée par la Société Texaco sous la marque déposée Jeffamine ED 2001: 1954 g.

Le mélange est homogénéisé durant environ une heure et le volume libre du ballon est purgé par de l'azote.

On introduit dans la solution agitée, par coulée régulière, en 30 minutes environ, 496 g de dimère d'acide gras Pripol 1010 d'Unichema Chemie, ayant un taux de monomère de 0,03 % et un taux de trimère de 3 %. La solution est homogénéisée durant 30 minutes.

On effectue un petit prélèvement d'environ 10 $cm^3$ que l'on dilue par un mélange eau/isopropanol (46,15/53,85 en poids) de façon à amener la concentration du sel de l'acide dimère et de la polyoxyéthylènediamine à 10 % en poids. La valeur du pH à 20°C de cette solution diluée est inférieure à celle du pH au point d'équivalence.

Dans la solution concentrée (53,33 %), on introduit 27 g d'une solution de la polyoxyéthylènediamine à 53,33 % en poids dans le mélange eau/caprolactame 71,43/28,57 (en poids). La solution est homogénéisée durant 30 minutes, puis on effectue à nouveau une mesure du pH en solution diluée à 10 % en sel comme précédemment. La valeur du pH de la solution diluée atteint, à plus ou moins cinq centièmes d'unité pH, celle du pH au point d'équivalence.

La solution concentrée, ainsi ajustée est conservée à 25°C sous atmosphère d'azote.

2) Préparation d'un copolyétheramide caprolactame/acide dimèrepolyoxyéthylènediamine de masse moléculaire 2355, de composition pondérale voisine de 40/60 (blocs amides/blocs éthers):

Dans l'autoclave décrit à l'exemple 1, partie 2), préchauffé à 75°C, on introduit:

- solution de sel de l'acide dimère et de la polyoxyéthylènediamine de masse moléculaire 2355 à 53,33 % en poids dans le mélange eau/caprolactame 71,43/28,57 (en poids) de l'exemple 2, partie 1): 3386 g
- solution aqueuse de caprolactame à 60 % en poids: 2412,5 g
- antioxydant Irganox 1010 de Ciba Geigy: 19 g
- acide hypophosphoreux en solution aqueuse à 50 % en poids: 3,7 g
- antimousse silicone: 0,5 $cm^3$.

On laisse homogénéiser la masse durant 15 minutes et on effectue trois purges à l'azote par mise sous pression de $3.10^5$ Pa, puis décompression. La température de la masse en agitation est élevée progressivement en 90 minutes environ jusqu'à 150°C tout en assurant une distillation régulière de l'eau. On maintient la température de la masse vers 150°C jusqu'à ce que le poids de distillat atteigne environ 2000 g.

On élève ensuite la température de la masse à 250°C, régulièrement, en 45 minutes puis progressivement jusqu'à 260°C en une heure.

On établit alors en 30 minutes environ, progressivement, une pression de $66,5.10^2$ Pa tout en maintenant la masse en homogénéisatio à 250° - 260°C. La masse est homogénéisée durant une heure sous cette pression réduite à une température de 260°C - 265°C. Durant la phase de réaction sous pression réduite, on recueille par distillation 608 g de caprolactame.

L'agitation est arrêtée, puis on établit dans l'autoclave une pression d'azote de $5.10^5$ Pa et on soutire le

polymère. Ce dernier, extrudé de l'autoclave sous forme de jonc, est refroidi par passage dans un bain d'eau froide, puis il est granulé et séché.

Le polymère obtenu est presque incolore, légèrement opalescent.

Il présente les caractéristiques suivantes mesurées sur les granulés secs:

- Point de fusion (Tf): 209° C
- Point de cristallisation au refroidissement (Tc): 166° C
- Viscosité à l'état fondu à 230° C sous un gradient de cisaillement $\gamma = 10\ s^{-1}$: 210 Pa s

Les caractéristiques physiques et mécaniques mesurées sur éprouvettes moulées par injection et conditionnées sont les suivantes:

- Reprise d'eau à 25° C: 57 %
- Température de transition vitreuse à EHO: - 56° C
- Module en torsion à EHO:

à + 20° C: 90 MPa

à - 20° C: 440 MPa

EXEMPLE 3

1) Préparation du sel d'une polyoxypropylènediamine de masse moléculaire égale à 455 et du dimère d'acide gras en solution à 33,33 % en poids dans un mélange eau/caprolactame 50/50 (en poids):

Dans l'appareil décrit à l'exemple 1, partie 1), sont chargés sous agitation:

- eau permutée: 1600 g
- caprolactame pur: 1600 g
- polyoxyprolylènediamine de masse moléculaire égale à 455 commercialisée par la Société BASF sous la dénomination Etherdiamine MG 420: 694,6 g.

Le mélange est homogénéisé durant environ une heure et le volume libre du ballon est purgé par de l'azote.

On introduit dans la solution agitée, par coulée régulière, en 30 minutes environ, 905,4 g de dimère d'acide gras Pripol 1010 d'Unichema Chemie, ayant un taux de monomère de 0,19 % et un taux de trimère voisin de 1 %. La solution est homogénéisée durant 30 minutes.

On effectue un petit prélèvement d'environ 10 $cm^3$ que l'on dilue par un mélange eau/isopropanol (42,85/57,15 en poids) de façon à amener la concentration du sel de l'acide dimère et de la polyoxypropylènediamine à 10 % en poids. La valeur du pH à 20° C de cette solution diluée est inférieure à celle du pH au point d'équivalence.

Dans la solution concentrée, on introduit 32 g d'une solution de la polyoxypropylènediamine à 33,33 % en poids dans le mélange eau/caprolactame 50/50 (en poids). La solution est homogénéisée durant 30 minutes, puis on effectue à nouveau une mesure du pH en solution diluée à 10 % en sel comme précédemment. La valeur du pH de la solution diluée atteint, à plus ou moins cinq centièmes d'unité pH, celle du pH au point d'équivalence.

La solution concentrée, ainsi ajustée est conservée à 25° C sous atmosphère d'azote.

2) Préparation d'un copolyétheramide caprolactame/acide dimèrepolyoxypropylènediamine de masse moléculaire 2065/acide dimèrepolyoxypropylènediamine de masse moléculaire 455, de composition pondérale voisine de 50/25/25 (blocs amides/blocs éthers du premier type/blocs éthers du second type):

Dans l'appareil décrit à l'exemple 1 partie 2), préchauffé à 75° C, sont chargés:

- solution de sel telle que préparée à l'exemple 1, partie 1): 2220 g
- solution de sel de l'exemple 3, partie 1): 2270 g
- solution aqueuse de caprolactame à 60 % en poids: 480 g
- antioxydant Irganox 1010 de Ciba Geigy: 15 g
- acide hypophosphoreux en solution aqueuse à 50 % en poids: 3 g
- antimousse silicone: 0,5 $cm^3$.

On laisse homogénéiser la masse durant 15 minutes et on effectue trois purges à l'azote par mise sous pression de $3.10^5$ Pa, puis décompression. La température de la masse en agitation est élevée progressivement en 75 minutes environ jusqu'à 150° C tout en assurant la distillation régulière de 1600 g de distillat.

On élève ensuite la température de la masse vers 250° C régulièrement en 45 minutes, puis progressivement jusqu'à 260° C en une heure.

On établit alors en une heure, progressivement, une pression de $53.10^2$ Pa tout en maintenant la masse en homogénéisation à 250° 260° C. La masse est homogénéisée durant une heure sous cette pression réduite, à une température de 260° C - 265° C. Durant la phase de réaction sous pression réduite, on recueille par distillation 320 g de caprolactame.

L'agitation est arrêtée, puis on établit dans l'autoclave une pression d'azote de $5.10^5$ Pa et on soutire le polymère. Ce dernier, extrudé de l'autoclave sous forme de jonc, est refroidi par passage dans un bain d'eau froide, puis il est granulé et séché.

Le polymère obtenu est presque incolore, légèrement opalescent.

Il présente les caractéristiques suivantes mesurées sur les granulés secs:

- Point de fusion (Tf): 206° C
- Point de cristallisation au refroidissement (Tc): 143° C
- Viscosité à l'état fondu à 230° C sous un gradient de cisaillement $\gamma = 10\ s^{-1}$: 195 Pa s

Les caractéristiques physiques et mécaniques mesurées sur éprouvettes moulées par injection et conditionnées sont les suivantes:

- Reprise d'eau à 25° C: 3 %
- Température de transition vitreuse à EHO: - 65° C
- Module en torsion à EHO:
à + 20° C: 95 MPa
à - 20° C: 300 MPa
- Caractéristiques mécaniques en traction à EHO et à 25° C:
. Contrainte au seuil d'écoulement: 13,8 MPa
. Allongement au seuil d'écoulement: 33 %
. Contrainte à la rupture: 48 MPa
. Allongement à la rupture: 640 %

EXEMPLE 4

1) Préparation du sel d'une polyoxypropylènediamine de masse moléculaire égale à 455 et du dimère d'acide gras en solution à 53,33 % en poids dans un mélange eau/caprolactame 71,43/28,57 (en poids):

Dans l'appareil décrit à l'exemple 1, partie 1), sont chargés sous agitation:
- eau permutée: 1503 g
- caprolactame pur: 601,5 g
- polyoxypropylènediamine de masse moléculaire égale à 455 commercialisée par la Société BASF sous la dénomination Etherdiamine MG 420: 1045 g.

Le mélange est homogénéisé durant environ une heure et le volume libre du ballon est purgé par de l'azote.

On introduit dans la solution agitée, par coulée régulière en 30 minutes environ, 1360 g de dimère d'acide gras Pripol 1010 d'Unichema Chemie, ayant un taux de monomère de 0,065 % et un taux de trimère de 4 %. La solution est homogénéisée durant 30 minutes.

On effectue un petit prélèvement d'environ 10 cm$^3$ que l'on dilue par mélange eau/isopropanol (46,15/53,85 en poids) de façon à amener la concentration du sel de l'acide dimère et de la polyoxyéthylènediamine à 10 % en poids. La valeur du pH à 20° C de cette solution diluée est inférieure à celle du pH au point d'équivalence.

Dans la solution concentrée, on introduit 32 g d'une solution de la polyoxypropylènediamine à 53,33 % en poids dans le mélange eau/caprolactame 71,43/28,57 (en poids). La solution est homogénéisée durant 30 minutes, puis on effectue à nouveau une mesure du pH en solution diluée à 10 % en sel comme précédemment. La valeur du pH de la solution diluée atteint, à plus ou moins cinq centièmes d'unité pH, celle du pH au point d'équivalence.

La solution concentrée, ainsi ajustée, est conservée à 25° C sous atmosphère d'azote.

2) Préparation d'un copolyétheramide caprolactame/acide dimèrepolyoxypropylènediamine de masse moléculaire 455, de composition pondérale voisine de 47,5/52,5 (blocs amides/blocs éthers):

On utilise l'appareillage de l'exemple 1, partie 2), et on réalise la préparation du copolymère en suivant le mode opératoire général de l'exemple 1, partie 2) en utilisant les charges suivantes:
- solution du sel de polyoxypropylènediamine de masse moléculaire 455 et du dimère d'acide gras à 53,33 % en poids dans le mélange eau/caprolactame 71,43/28,57 (en poids) de l'exemple 4, partie 1): 3130 g
- solution aqueuse de caprolactame à 60 % en poids: 2340 g
- antioxydant Irganox 1010 de la Société Ciba Geigy: 15 g
- acide hypophosphoreux en solution aqueuse à 50 % en poids: 3 g
- antimousse silicone: 0,5 cm$^3$.

Durant la phase de distillation jusqu'à 150° C la quantité de distillat recueilli est de 1890 g.

La phase finale de polymérisation est réalisée sous une pression réduite de 53.10$^2$ Pa. Durant la phase sous pression réduite, on élimine par distillation 370 g de caprolactame.

Le polymère obtenu présente les caractéristiques suivantes mesurées sur les granulés secs:
- Point de fusion (Tf): 191° C
- Point de cristallisation au refroidissement (Tc): 139,5° C
- Viscosité à l'état fondu à 230° C sous un gradient de cisaillement $\gamma = 10\ s^{-1}$: 950 poises

Les caractéristiques physiques et mécaniques mesurées sur éprouvettes moulées par injection et conditionnées sont les suivantes:
- Température de transition vitreuse à EHO: -22° C
- Module en torsion à EHO:
à + 20° C: 95 MPa
à - 20° C: 620 MPa

EXEMPLE 5:

Préparation d'un copolyétheramide caprolactame/acide dimèrepolyoxypropylènediamine de masse moléculaire 2065, de composition pondérale voisine de 80/20 (blocs amides/blocs éthers):

On utilise l'appareillage décrit à l'exemple 1, partie 2), et on réalise la préparation du copolymère en suivant le mode opératoire général de l'exemple 1, partie 2) en utilisant les charges suivantes:
- solution du sel d'une polyoxypropylènediamine de masse moléculaire 2065 et du dimère d'acide gras en solution à 33,3 % en poids dans le mélange eau/caprolactame 50/50 (en poids) telle que preparée dans l'exemple 1, partie 1): 1800 g
- solution aqueuse de caprolactame à 60 % en poids: 3730 g
- antioxydant Irganox 1010 de la Société Ciba Geigy: 15 g
- acide hypophosphoreux en solution aqueuse à 50 % en poids: 3 g

- antimousse silicone: 0,5 $cm^3$.

Durant la phase de distillation jusqu'à 150° C la quantité de distillat recueilli est voisine de 2000 g.

La phase finale de polymérisation est réalisée sous une pression réduite de $133.10^2$ Pa. Durant la phase sous pression réduite, on élimine par distillation 471 g de caprolactame.

Le polymère obtenu présente les caractéristiques suivantes mesurées sur granulés secs:

- Point de fusion (Tf): 215,5° C
- Point de cristallisation au refroidissement (Tc): 163° C
- Viscosité à l'état fondu à 230° C sous un gradient de cisaillement $\gamma = 10\ s^{-1}$: 780 Pa s

Les caractéristiques physiques et mécaniques mesurées sur éprouvettes moulées par injection et conditionnées sont les suivantes:

- Température de transition vitreuse à EHO: -68° C
- Module en torsion à EHO:

à + 20° C: 330 MPa

à - 20° C: 570 MPa

EXEMPLE 6

1) Préparation du sel d'une polyoxyéthylènediamine de masse moléculaire égale à 2065 et du dimère d'acide gras en solution à 53,33 % en poids dans le mélange eau/caprolactame 71,43/28,57 (en poids):

On utilise l'appareillage de l'exemple 1, partie 1). Dans le ballon sont chargées sous agitation:

- eau permutée: 938 g
- caprolactame pur: 375 g
- polyoxypropylènediamine de masse moléculaire égale à 2065 commercialisée par la Société BASF sous la dénomination Etherdiamine 2000: 1170 g.

Le mélange est homogénéisé durant environ une heure et le volume libre du ballon est purgé par de l'azote.

On introduit dans la solution agitée, par coulée régulière, en 30 minutes environ, 330 g de dimère d'acide gras Pripol 1010 d'Unichema Chemie, ayant un taux de monomère de 0,065 % et un taux de trimère de 4 %. La solution est homogénéisée durant 30 minutes.

On effectue un petit prélèvement d'environ 10 $cm^3$ que l'on dilue par un mélange eau/isopropanol (46,15/53,85 en poids) de façon à amener la concentration du sel de l'acide dimère et de la polyoxypropylènediamine à 10 % en poids. La valeur du pH de cette solution est inférieure à celle du pH au point d'équivalence.

Dans la solution concentrée, on introduit 28 g d'une solution de la polyoxypropylènediamine à 53,33 % en poids dans le mélange eau/caprolactame 71,43/28,57 (en poids). La solution est homogénéisée durant 30 minutes, puis on effectue à nouveau une mesure du pH en solution diluée à 10 % en sel comme précédemment. La valeur du pH de la solution diluée atteint, à plus ou moins cinq centièmes d'unité pH, celle du pH au point d'équivalence. La solution concentrée, ainsi ajustée est conservée à 25° C sous atmosphère d'azote.

2) Préparation d'un copolyétheramide caprolactame/acide dimàrepolyoxyéthylènediamine de masse moléculaire 2065, de composition pondérale voisine de 20/80 (blocs amides/blocs éthers):

On utilise l'appareillage de l'exemple 1, partie 2) et on réalise la préparation du copolymère en suivant le mode opératoire général de l'exemple 1, partie 2) en utilisant les charges suivantes:

- solution du sel de la polyoxypropylènediamine de masse moléculaire 2065 et du dimère d'acide gras en solution à 53,33 % en poids dans le mélange eau/caprolactame 71,43/28,57 (en poids) de l'exemple 6, partie 1): 2800 g
- solution aqueuse à 60 % en poids de caprolactame: 145 g
- antioxydant Irganox 1010 de Ciba Geigy: 9 g
- acide hypophosphoreux en solution aqueuse à 50 % en poids: 1,8 g
- antimousse silicone: 0,5 $cm^3$

Durant la phase de distillation jusqu'à 150° C la quantité de distillat recueilli est voisine de 940 g.

La phase finale de polymérisation est réalisée sous pression réduite de $6,65.10^2$ Pa. Durant la phase sous pression réduite, on élimine par distillation 90 g de caprolactame.

Le polymère obtenu présente les caractéristiques suivantes mesurées sur granulés secs:

- Point de fusion (Tf): 186° C
- Point de cristallisation au refroidissement (Tc): 116° C
- Viscosité à l'état fondu à 230° C sous un gradient de cisaillement $\gamma = 10\ s^{-1}$: 70 Pa s

Les caractéristiques physiques et mécaniques mesurées sur éprouvettes moulées par injection et conditionnées sont les suivantes:

- Température de transition vitreuse à EHO: -68° C
- Module en torsion à EHO:

à + 20° C: 21 MPa

à - 20° C: 25 MPa

**Revendications**

pour les Etats contractants BE, CH, DE, FR, GB, IT, LI, LU, NL, SE.

1. Copolyétheramides homogènes, à structure bloc, présentant notamment un point de fusion ou de ramollissement au moins égal à 170° C, une température de transition vitreuse mesurée à EHO au plus égale à -5° C et une viscosité à l'état fondu mesurée dans des conditions déterminées au moins égale à 50 Pa s, les dits copolyétheramides étant caractérisés en ce qu'ils sont susceptibles d'être obtenus conformément au mode opératoire défini par les points suivants:

. on mélange un lactame ayant de 4 à 12 atomes de carbone avec une solution d'un sel de dimère d'acide gras et de polyoxyalkylènediamine dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame;

. la stoechiométrie dudit sel ayant été établie au préalable en mesurant le pH de la solution du sel dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée;

. puis on ajoute dans le mélange réactionnel une petite quantité d'un additif consistant dans un oxyacide minéral ou dans un oxyacide organique autre qu'un acide carboxylique, dont l'une au moins des fonctions acides, quand il y en a plusieurs, possède une constante d'ionisation pKa dans l'eau à 25° C égale ou inférieure à 4 et on soumet ensuite l'ensemble à un chauffage pour faire réagir le lactame avec le sel.

2. Copolyétheramides selon la revendication 1, caractérisés en ce que le lactame auquel on fait appel est l' ε -caprolactame.

3. Copolyétheramides selon l'une quelconque des revendications 1 et 2, caractérisés en ce que les acides diméres employés sont obtenus par polymérisation et fractionnement de composés comprenant 80 à 100 % en poids d'acide(s) gras monomère(s) ayant de 16 à 20 atomes de carbone et 20 à 0 % en poids d'acide(s) gras monomère(s) ayant de 8 à 15 atomes de carbone et/ou de 21 à atomes de carbone, lesdits acides dimères comprenant une fraction en acide difonctionnel qui est supérieure à 94 % en poids, une fraction en acide monofonctionnel qui est inférieure à 1 % en poids et une fraction en acide de fonctionnalité supérieure à 2 qui est inférieure à 5 % en poids.

4. Copolyétheramides selon la revendication 3, caractérisés en ce que les acides dimères auxquels on fait appel consistent dans les espèces obtenues par fractionnement d'une composition hydrogénée issue de la polymérisation catalytique d'acide(s) gras monomère(s) ayant 18 atomes carbone.

5. Copolyétheramides selon l'une quelconque des revendications 1 à 4, caractérisés en ce que les polyoxyalkylènediamines auxquelles on fait appel comprennent les composés de formule générale:

$H_2N - R_1 - (OR_2)_n - OR_3 - NH_2$ (I)

dans laquelle les symboles $R_1$, $R_2$, $R_3$, identiques ou différents, représentent des radicaux aliphatiques saturés divalents, linéaires ou ramifiés, comportant de 1 à 10 atomes de carbone et le symbole n est un nombre déterminé de manière à procurer une masse moléculaire allant de 100 à 10 000 et, de préférence, allant de 300 à 5 000.

6. Copolyétheramides selon la revendication 5, caractérisés en ce que les polyoxyalkylènediamines auxquels on fait appel comprennent des polyoxypropylènediamines de formule (I) dans laquelle

$R_1 = R_2 = R_3 = -\underset{|}{\overset{CH_3}{C}}H - CH_2 -$, des polyoxyéthylènediamines de formule (I) dans laquelle $R_1 = R_3 = -\overset{CH_3}{\overset{|}{C}H} - CH_2 -$ et $R_2 = - CH_2 - CH_2 -$ ou des polyoxytétraméthylènediamines de formule (I) dans laquelle $R_1 = R_3 = -\overset{CH_3}{\overset{|}{C}H} - CH_2 -$

et $R_2 = - CH_2 - CH_2 - CH_2 - CH_2 -$, ces composés ayant une masse moléculaire allant de 100 à 10.000 et, de préférence, allant de 300 à 5000.

7. Copolyétheramides selon l'une quelconque des revendications 1 à 6, caractérisés en ce que les additifs acides auxquels on fait appel comprennent: parmi les oxyacides minéraux, les acides sulfureux, sulfurique,

hypophosphoreux, phosphoreux, orthophosphorique ou pyrophosphorique; parmi les oxyacides organiques, les acides organosulfoniques, en particulier les acides méthanesulfonique, paratoluènesulfonique ou naphtalènesulfonique ou les acides organophosphoniques, en particulier les acides monoalkyl- ou monoarylphosphoniques tels que les acides méthylphosphonique ou benzènephosphonique.

8. Copolyétheramides selon la revendication 7, caractérisés en ce que les additifs acides auxquels on fait appel comprennent les acides dérivés du phosphore appartenant au groupe des acides hypophosphoreux, phosphoreux, orthophosphorique, pyrophosphorique, méthylphosphonique ou benzènephosphonique.

9. Copolyétheramides selon l'une quelconque des revendications 7 et 8, caractérisés en oe que les proportions d'acide fort, exprimées en pourcentage en poids par rapport au copolyétheramide final, sont comprises généralement entre 0,01 et 1 % et de préférence entre 0,01 et 0,5 %.

10. Copolyétheramides selon l'une quelconque des revendications 1 à 9, caractérisés en ce que les proportions pondérales de blocs amides dans le polymère final sont comprises entre 15 et 85 % et, de préférence, entre 40 et 60 % et les proportions pondérales de blocs éthers sont comprises entre 85 et 15 % et, de préférence, entre 60 et 40 %.

**Revendications**

pour l'Etat contractant AT

1. Procédé de préparation de copolyétheramides homogènes, à structure bloc, présentant notamment un point de fusion ou de ramollissement au moins égal à 170°C, une température de transition vitreuse mesurée à EHO au plus égale à - 5°C et une viscosité à l'état fondu mesurée dans des conditions déterminées au moins égale à 50 Pa s, caractérisé en ce qu'on met en oeuvre le mode opératoire défini par les points suivants:

. on mélange un lactame ayant de 4 à 12 atomes de carbone avec une solution d'un sel de dimère d'acide gras et de polyoxyalkylènediamine dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame;

. la stoechiométrie dudit sel ayant été établie au préalable en mesurant le pH de la solution du sel dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à $\pm$ 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée;

. puis on ajoute dans le mélange réactionnel une petite quantité d'un additif consistant dans un oxyacide minéral ou dans un oxyacide organique autre qu'un acide carboxylique, dont l'une au moins des fonctions acides, quand il y en a plusieurs, possède une constante d'ionisation pKa dans l'eau à 25°C égale ou inférieure à 4 et on soumet ensuite l'ensemble à un chauffage pour faire réagir le lactame avec le sel.

2. Procédé selon la revendication 1, caractérisé en ce que le lactame auquel on fait appel est l' $\varepsilon$ -caprolactame.

3. Procédé selon l'une quelconque des revendications 1 et 2, caractérisé en ce que les acides dimères employés sont obtenus par polymérisation et fractionnement de composés comprenant 80 à 100 % en poids d'acide(s) gras monomère(s) ayant de 16 à 20 atomes de carbone et 20 à 0 % en poids d'acide(s) gras monomère(s) ayant de 8 à 15 atomes de carbone et/ou de 21 à 24 atomes de carbone, lesdits acides dimères comprenant une fraction en acide difonctionnel qui est supérieure à 94 % en poids, une fraction en acide monofonctionnel qui est inférieure à 1 % en poids et une fraction en acide de fonctionnalité supérieure à 2 qui est inférieure à 5 % en poids.

4. Procédé selon la revendication 3, caractérisé en ce que les acides dimères auxquels on fait appel consistent dans les espèces obtenues par fractionnement d'une composition hydrogénée issue de la polymérisation catalytique d'acide(s) gras monomère(s) ayant 18 atomes carbone.

5. Procédé selon l'une quelconque des revendications 1 à 4, caractérisé en ce que les polyoxyalkylènediamines auxquelles on fait appel comprennent les composés de formule générale:

$H_2N - R_1 - (OR_2)_n - OR_3 - NH_2$ (I)

dans laquelle les symboles $R_1$, $R_2$, $R_3$, identiques ou différents, représentent des radicaux aliphatiques saturés divalents, linéaires ou ramifiés, comportant de 1 à 10 atomes de carbone et le symbole n est un nombre déterminé de manière à procurer une masse moléculaire allant de 100 à 10 000 et, de préférence, allant de 300 à 5 000.

6. Procédé selon la revendication 5, caractérisé en ce que les polyoxyalkylènediamines auxquels on fait appel comprennent des polyoxypropylènediamines de formule (I) dans laquelle

$R_1 = R_2 = R_3 = -\underset{\displaystyle}{\overset{\displaystyle CH_3}{\overset{|}{CH}}} - CH_2 -$, des polyoxyéthylènediamines de formule (I) dans laquelle $R_1 = R_3 = -\overset{CH_3}{\overset{|}{CH}} - CH_2 -$ et $R_2 = - CH_2 - CH_2 -$ ou des polyoxytétraméthylènediamines de formule (I) dans laquelle $R_1 = R_3 = -\overset{CH_3}{CH} - CH_2 -$ et $R_2 = - CH_2 - CH_2 - CH_2 - CH_2 -$, ces composés ayant une masse moléculaire allant de 100 à 10.000 et, de préférence, allant de 300 à 5000.

7. Procédé selon l'une quelconque des revendications 1 à 6, caractérisé en ce que les additifs acides auxquels on fait appel comprennent: parmi les oxyacides minéraux, les acides sulfureux, sulfurique, hypophosphoreux, phosphoreux, orthophosphorique ou pyrophosphorique; parmi les oxyacides organiques, les acides organosulfoniques, en particulier les acides méthanesulfonique, paratoluènesulfonique ou naphtalènesulfonique ou les acides organophosphoniques, en particulier les acides monoalkyl- ou monoarylphosphoniques tels que les acides méthylphosphonique ou benzènephosphonique.

8. Procédé selon la revendication 7, caractérisé en oe que les additifs acides auxquels on fait appel comprennent les acides dérivés du phosphore appartenant au groupe des acides hypophosphoreux, phosphoreux; orthophosphorique, pyrophosphorique, méthylphosphonique ou benzènephosphonique.

9. Procédé selon l'une quelconque des revendications 7 et 8, caractérisé en ce que les proportions d'acide fort, exprimées en pourcentage en poids par rapport au copolyétheramide final, sont comprises généralement entre 0,01 et 1 % et de préférence entre 0,01 et 0,5 %.

10. Procédé selon l'une quelconque des revendications 1 à 9, caractérisé en ce que les proportions pondérales de blocs amides dans le polymère final sont comprises entre 15 et 85 % et, de préférence, entre 40 et 60 % et les proportions pondérales de blocs éthers sont comprises entre 85 et 15 % et, de préférence, entre 60 et 40 %.

**Patentansprüche**

für die Vertragsstaaten BE, CH, DE, FR, GB, IT, LI, LU, NL, SE.

1. Homogene Copolyetheramide mit Blockstruktur, welche insbesondere einen Schmelz- oder Erweichungspunkt von wenigstens gleich 170°C zeigen, eine Glasübergangstemperatur, gemessen mit EHO, von höchstens gleich -5°C und eine Viskosität im geschmolzenen Zustand, gemessen unter bestimmten Bedingungen, von wenigstens gleich 50 Pa.s, wobei die genannten Copolyetheramide dadurch gekennzeichnet sind, daß sie geeignet sind, um gemäß der Verfahrensweise, definiert durch die folgenden Punkte, erhalten zu werden:

- Man mischt ein Lactam mit 4 bis 12 Kohlenstoffatomen mit einer Lösung eines Salzes von dimerer Fettsäure und von Polyoxialkylendiamin in einem Lösungsmilieu auf der Basis einer Mischung Wasser-aliphatischer Alkohol mit weniger als 5 Kohlenstoffatomen, einer Wasser-Alkohol-Lactam-Mischung (wobei der verwendete Alkohol und das Lactam,der eine wie das andere, der hier vorher gegebenen Definition entsprechen), von Lactam selbst in geschmolzenem Zustand oder auch,wenn das Lactam löslich in Wasser ist,einer Wasser-Lactam-Mischung;

- die Stöchiometrie des genannten Salzes vorher festgestellt wurde, indem das pH der Lösung des Salzes in einer lösenden Mischung auf der Basis von Wasser und wenigstens einer Verbindung, ausgewählt unter einem aliphatischen Alkohol, einem aliphatischen Diol oder einem Lactam (wobei der verwendete Alkohol und das Lactam, der eine wie das andere, der hier vorhergegebenen Definition entsprechen, das aliphatische Diol 2 bis 6 Kohlenstoffatome umfaßt) gemessen wird und indem die Zusammensetzung des genannten Salzes so eingestellt wird, daß das pH bis ± 0,05 pH-Einheiten den pH-Wert an Äquivalenzpunkt erreicht, die Mischung der Lösung des Salzes mit dem Lactam weggelassen werden kann, wenn die Lösung des Salzes in dem Lösungsmilieu auf der Basis einer Wasser-Alkohol-Lactam-Mischung, einer Wasser-Lactam-Mischung oder von Lactam selbst in geschmolzenem Zustand genügend Lactam enthält, um Copolyetheramide der gewünschten Zusammensetzung zu erhalten;

- dann fügt man in die Reaktionsmischung eine kleine Menge eines Additivs zu, bestehend aus einer Sauerstoffmineralsäure oder aus einer organischen Sauerstoffsäure, verschieden von einer Carbonsäure, wovon wenigstens eine der Säurefunktionen, wenn es davon mehrere gibt, eine Ionisationskonstante pKa in Wasser bei 25°C von gleich oder niedriger als 4 besitzt und man dann das ganze einem Erhitzen unterwirft, um

das Lactam mit dem Salz zur Reaktion zu bringen.

2. Copolyetheramide gemäß Anspruch 1, dadurch gekennzeichnet, daß das Lactam, das man verwendet, das ε-Caprolactam ist.

3. Copolyetheramide gemäß einem der Ansprüche 1 und 2, dadurch gekennzeichnet, daß die verwendeten dimeren Säuren durch Polymerisation und Fraktionierung der Zusammensetzungen erhalten werden, welche 80 bis 100 Gew.-% monomere Fettsäure(n) mit 16 bis 20 Kohlenstoffatomen und 20 bis 0 Gew.-% monomere Fettsäure(n) mit 8 bis 15 Kohlenstoffatomen und/oder 21 bis 24 Kohlenstoffatomen umfassen, wobei die genannten dimeren Säuren eine Fraktion aus difunktioneller Säure, die höher als 94 Gew.-% ist, eine Fraktion aus monofunktioneller Säure, die niedriger als 1 Gew.-%, und eine Fraktion aus Säuren mit höherer Funktionalität als 2, die niedriger als 5 Gew.-% ist, umfassen.

4. Copolyetheramide gemäß Anspruch 3, dadurch gekennzeichnet, daß die dimeren Säuren, die man verwendet, aus den Spezien bestehen, die durch Fraktionierung einer hydrierten Zusammensetzung erhalten wurden, welche aus der katalytischen Polymerisation monomerer Fettsäure(n) mit 18 Kohlenstoffatomen hervorgegangen ist.

5. Copolyetheramide gemäß einem der Ansprüche 1 bis 4, dadurch gekennzeichnet, daß die Polyoxialkylendiamine, die man verwendet, die Verbindungen der allgemeinen Formel

$H_2N - R_1 - (OR_2)_n - OR_3 - NH_2$ (I)

enthalten, worin die Symbole $R_1$, $R_2$, $R_3$,gleich oder verschieden, aliphatische gesättigte divalente Reste, linear oder verzweigt, umfassend 1 bis 10 Kohlenstoffatome, darstellen, und das Symbol n eine Zahl ist, die so bestimmt ist, daß eine Molekularmasse bewirkt wird, die sich zwischen 100 bis 10000 bewegt und sich bevorzugt zwischen 300 bis 5000 bewegt.

6. Copolyetheramide gemäß Anspruch 5, dadurch gekennzeichnet, daß die Polyoxialkylendiamine, die man verwendet, Polyoxipropylendiamine der Formel (I), worin

$R_1 = R_2 = R_3 = -\underset{}{CH}(CH_3) - CH_2 -$, Polyoxiethylendiamine der Formel (I), worin $R_1 = R_3 = -CH(CH_3) - CH_2 -$ und $R_2 = - CH_2 - CH_2 -$ oder Polyoxitetramethylendiamine der Formel (I), worin $R_1 = R_3 = - CH(CH_3) - CH_2 -$ und $R_2 = - CH_2 - CH_2 - CH_2 - CH_2 -$, enthalten, wobei diese Zusammensetzungen eine Molekularmasse haben, die sich von 100 bis 10 000 bewegt und sich bevorzugt von 300 bis 5000 bewegt.

7. Copolyetheramide gemäß einem der Ansprüche 1 bis 6, dadurch gekennzeichnet, daß die sauren Additive, die man verwendet, enthalten: unter den Sauerstoffmineralsäuren die schwefelige Säure, die Schwefelsäure, die hypophosphorige Säure, die phosphorige Säure, die Orthophosphorsäure oder die Pyrophosphorsäure; unter den organischen Sauerstoffsäuren die Organosulfonsäuren, insbesondere die Methansulfonsäure, die Paratoluolsulfonsäure oder Naphthalinsulfonsäure oder die Organophosphonsäuren, insbesondere die Monoalkyl- oder Monoarylphosphonsäuren wie die Methylphosphonsäure oder die Benzolphosphonsäure.

8. Copolyetheramide gemäß Anspruch 7, dadurch gekennzeichnet, daß die sauren Additive, die man verwendet, die Säurederivate des Phosphors umfassen, die der Gruppe der hypophosphorigen Säure, der phosphorigen Säure, der Orthophosphorsäure, der Pyrophosphorsäure, der Methylphosphonsäure oder der Benzolphosphonsäure angehören.

9. Copolyetheramide gemäß einem der Ansprüche 7 und 8, dadurch gekennzeichnet, daß die Verhältnisse der starken Säure, ausgedrückt in Gewichtsprozent, in Bezug auf das Endcopolyetheramid gewöhnlich zwischen 0,01 und 1 % und bevorzugt zwischen 0,01 und 0,5 % liegen.

10. Copolyetheramide gemäß einem der Ansprüche 1 bis 9, dadurch gekennzeichnet, daß die Gewichtsverhältnisse der Amidblöcke in dem Endpolymer zwischen 15 und 85 % und bevorzugt zwischen 40 und 60 % liegen und die Gewichtsverhältnisse der Etherblöcke zwischen 85 und 15 % und bevorzugt zwischen 60 und 40 % liegen.

**Patentansprüche**

für den Vertragsstaat AT

1. Verfahren zur Herstellung von homogenen Copolyetheramiden mit Blockstruktur, welche insbesondere

einen Schmelz- oder Erweichungspunkt von wenigstens gleich 170°C zeigen, eine Glasübergangstemperatur, gemessen mit EHO, von höchstens gleich -5°C und eine Viskosität im geschmolzenen Zustand, gemessen unter bestimmten Bedingungen, von wenigstens gleich 50 Pa.s, dadurch gekennzeichnet, daß man die durch die folgenden Punkte definierte Verfahrensweise anwendet:

- Man mischt ein Lactam mit 4 bis 12 Kohlenstoffatomen mit einer Lösung eines Salzes von dimerer Fettsäure und von Polyoxialkylendiamin in einem Lösungsmilieu auf der Basis einer Mischung Wasser-aliphatischer Alkohol mit weniger als 5 Kohlenstoffatomen, einer Wasser-Alkohol-Lactam-Mischung (wobei der verwendete Alkohol und das Lactam, der eine wie das andere, der hier vorher gegebenen Definition entsprechen), von Lactam selbst in geschmolzenem Zustand oder auch, wenn das Lactam löslich in Wasser ist, einer Wasser-Lactam-Mischung;

- die Stöchiometrie des genannten Salzes vorher festgestellt wurde, indem das pH der Lösung des Salzes in einer lösenden Mischung auf der Basis von Wasser und wenigstens einer Verbindung, ausgewählt unter einem aliphatischen Alkohol, einem aliphatischen Diol oder einem Lactam (wobei der verwendete Alkohol und das Lactam, der eine wie das andere, der hier vorher gegebenen Definition entsprechen, das aliphatische Diol 2 bis 6 Kohlenstoffatome umfaßt) gemessen wird und indem die Zusammensetzung des genannten Salzes so eingestellt wird, daß das pH bis ± 0,05 pH-Einheiten den pH-Wert an Äquivalenzpunkt erreicht, die Mischung der Lösung des Salzes mit dem Lactam weggelassen werden kann, wenn die Lösung des Salzes in dem Lösungsmilieu auf der Basis einer Wasser-Alkohol-Lactam-Mischung, einer Wasser-Lactam-Mischung oder von Lactam selbst in geschmolzenem Zustand genügend Lactam enthält, um Copolyetheramide der gewünschten Zusammensetzung zu erhalten;

- dann fügt man in die Reaktionsmischung eine kleine Menge eines Additivs zu, bestehend aus einer Sauerstoffmineralsäure oder aus einer organischen Sauerstoffsäure, verschieden von einer Carbonsäure, wovon wenigstens eine der Säurefunktionen, wenn es davon mehrere gibt, eine Ionisationskonstante pKa in Wasser bei 25°C von gleich oder niedriger als 4 besitzt und man dann das ganze einem Erhitzen unterwirft, um das Lactam mit dem Salz zur Reaktion zu bringen.

2. Verfahren gemäß Anspruch 1, dadurch gekennzeichnet, daß das Lactam, das man verwendet, das ε-Caprolactam ist.

3. Verfahren gemäß einem der Ansprüche 1 und 2, dadurch gekennzeichnet, daß die verwendeten dimeren Säuren durch Polymerisation und Fraktionierung der Zusammensetzungen erhalten werden, welche 80 bis 100 Gew.-% monomere Fettsäure(n) mit 16 bis 20 Kohlenstoffatomen und 20 bis 0 Gew.-% monomere Fettsäure(n) mit 8 bis 15 Kohlenstoffatomen und/oder 21 bis 24 Kohlenstoffatomen umfassen, wobei die genannten dimeren Säuren eine Fraktion aus difunktioneller Säure, die höher als 94 Gew.-% ist, eine Fraktion aus monofunktioneller Säure, die niedriger als 1 Gew.-%, und eine Fraktion aus Säuren mit höherer Funktionalität als 2, die niedriger als 5 Gew.-% ist, umfassen.

4. Verfahren gemäß Anspruch 3, dadurch gekennzeichnet, daß die dimeren Säuren, die man verwendet, aus den Spezien bestehen, die durch Fraktionierung einer hydrierten Zusammensetzung erhalten wurden, welche aus der katalytischen Polymerisation monomerer Fettsäure(n) mit 18 Kohlenstoffatomen hervorgegangen ist.

5. Verfahren gemäß einem der Ansprüche 1 bis 4, dadurch gekennzeichnet, daß die Polyoxialkylendiamine, die man verwendet, die Verbindungen der allgemeinen Formel

$H_2N - R_1 - (OR_2)_n - OR_3 - NH_2$ (I)

enthalten, worin die Symbole $R_1$, $R_2$, $R_3$, gleich oder verschieden, aliphatische gesättigte divalente Reste, linear oder verzweigt, umfassend 1 bis 10 Kohlenstoffatome, darstellen, und das Symbol n eine Zahl ist, die so bestimmt ist, daß eine Molekularmasse bewirkt wird, die sich zwischen 100 bis 10000 bewegt und sich bevorzugt zwischen 300 bis 5000 bewegt.

6. Verfahren gemäß Anspruch 5, dadurch gekennzeichnet, daß die Polyoxialkylendiamine, die man verwendet, Polyoxipropylendiamine der Formel (I), worin

$R_1 = R_2 = R_3 = -\underset{|}{\overset{CH_3}{CH}} - CH_2 -$, Polyoxiethylendiamine der Formel (I), worin $R_1 = R_3 = -\overset{CH_3}{\underset{|}{CH}} - CH_2 -$ und $R_2 = - CH_2 - CH_2 -$ oder Polyoxitetramethylendiamine der Formel (I), worin $R_1 = R_3 = -\overset{CH_3}{\underset{|}{CH}} - CH_2 -$ und $R_2 = -CH_2 - CH_2 - CH_2 - CH_2 -$ enthalten, wobei diese Zusammensetzungen eine Molekularmasse haben, die sich von 100 bis 10 000 bewegt und sich bevorzugt von 300 bis 5000 bewegt.

7. Verfahren gemäß einem der Ansprüche 1 bis 6, dadurch gekennzeichnet, daß die sauren Additive, die man verwendet, enthalten: unter den Sauerstoffmineralsäuren die schwefelige Säure, die Schwefelsäure, die

hypophosphorige Säure, die phosphorige Säure, die Orthophosphorsäure oder die Pyrophosphorsäure; unter den organischen Sauerstoffsäuren die Organosulfonsäuren, insbesondere die Methansulfonsäure, die Paratoluolsulfonsäure oder Naphthalinsulfonsäure oder die Organophosphonsäuren, isnbesondere die Monoalkyl- oder Monoarylphosphonsäuren wie die Methylphosphonsäure oder die Benzolphosphonsäure.

8. Verfahren gemäß Anspruch 7, dadurch gekennzeichnet, daß die sauren Additive, die man verwendet, die Säurederivate des Phosphors umfassen, die der Gruppe der hypophosphorigen Säure, der phosphorigen Säure, der Orthophosphorsäure, der Pyrophosphorsäure, der Methylphosphonsäure, der Methylphosphonsäure oder der Benzolphosphonsäure angehören.

9. Verfahren gemäß einem der Ansprüche 7 und 8, dadurch gekennzeichnet, daß die Verhältnisse der starken Säure, ausgedrückt in Gewichtsprozent, in Bezug auf das Endcopolyetheramid gewöhnlich zwischen 0,01 und 1 % und bevorzugt zwischen 0,01 und 0,5 % liegen.

10. Verfahren gemäß einem der Ansprüche 1 bis 9, dadurch gekennzeichnet, daß die Gewichtsverhältnisse der Amidblöcke in dem Endpolymer zwischen 15 und 85 % und bevorzugt zwischen 40 und 60 % liegen und die Gewichtsverhältnisse der Etherblöcke zwischen 85 und 15 % und bevorzugt zwischen 60 und 40 % liegen.

**Claims**

for the Contracting States BE, CH, DE, FR, GB, IT, LI, LU, NL, SE.

1. Homogeneous copolyetheramides with a block structure, which have, in particular, a melting or softening point of at least 170°C, a glass transition temperature determined at zero relative humidity of not more than -5°C and a melt viscosity determined under defined conditions of at least 50 Pa s, the said copolyetheramides being characterized in that they can be obtained according to the procedure defined as follows:

a lactam containing 4 to 12 carbon atoms is mixed with a solution of a polyoxyalkylenediamine salt of a fatty acid dimer in a solvent medium based on a mixture of water and an aliphatic alcohol containing less that 5 carbon atoms, a water/alcohol/lactam mixture (the alcohol and the lactam used both meeting the definitions given above), the lactam itself in the molten state or, when the lactam is water-soluble, a water/lactam mixture;

the stoichiometry of the said salt being determined beforehand by measuring the pH of the solution of the salt in a diluent mixture based on water and at least one compound chosen from amongst an aliphatic alcohol, an aliphatic diol or a lactam (the alcohol and the lactam used both meeting the definitions given above, the aliphatic diol containing from 2 to 6 carbon atoms) and by adjusting the composition of the said salt so that the pH reaches, within $\pm$ 0.05 pH unit, the pH value at the point of equivalence, it being possible for the mixture of the solution of the salt with the lactam to be omitted if the salt solution in the solvent medium based on a water/ alcohol/lactam mixture, a water/lactam mixture or the lactam itself in the molten state contains sufficient lactam to obtain the copolyetheramide of the desired composition;

a small amount of an additive consisting of an inorganic oxyacid or an organic oxyacid other than a carboxylic acid, at least one acid group of which, when there are several, has an ionization constant pKa in water at 25°C equal to or less than 4 is then added to the reaction mixture and the whole is then heated in order to make the lactam react with the salt.

2. Copolyetheramides according to Claim 1, characterized in that the lactam used is ε-caprolactam.

3. Copolyetheramides according to either of Claims 1 and 2, characterized in that the dimeric acids employed are obtained by polymerization and fractionation of compounds containing 80 to 100% by weight of monomeric fatty acid(s) containing from 16 to 20 carbon atoms and 20 to 0% by weight of monomeric fatty acid(s) containing from 8 to 15 carbon atoms and/or from 21 to 24 carbon atoms, the said dimeric acids comprising a difunctional acid fraction which is greater than 94% by weight, a monofunctional acid fraction which is less than 1% by weight and a fraction of acid of functionality greater than 2 which is less than 5% by weight.

4. Copolyetheramides according to Claim 3, characterized in that the dimeric acids employed consist of species obtained by fractionation of a hydrogenated composition resulting from the catalytic polymerization of monomeric fatty acid(s) containing 18 carbon atoms.

5. Copolyetheramides according to any one of Claims 1 to 4, characterized in that the polyoxyalkylenediamines employed comprise compounds of general formula:

$H_2N - R_1 - (OR_2)_n - OR_3 - NH_2$ (I)

in which the symbols $R_1$, $R_2$ and $R_3$, which may be identical or different, represent straight-chain or branched, divalent saturated aliphatic radicals containing from 1 to 10 carbon atoms and the symbol n is a number determined so as to obtain a molecular mass ranging from 100 to 10,000 and, preferably, ranging from 300 to 5,000.

6. Copolyetheramides according to Claim 5, characterized in that the polyoxyalkylenediamines employed comprise polyoxypropylenediamines of formula (I) in which

$R_1 = R_2 = R_3 = -CH-\overset{\overset{CH_3}{|}}{C}H_2-$, polyoxyethylenediamines of formula (I) in which $R_1 = R_3 = -CH-\overset{\overset{CH_3}{|}}{C}H_2-$ and $R_2 = -CH_2-CH_2-$ or polyoxytetramethylenediamines of formula (I) in which $R_1 = R_3 = -CH-\overset{\overset{CH_3}{|}}{C}H_2-$

and $R_2 = -CH_2-CH_2-CH_2-CH_2-$, these compounds having a molecular mass ranging from 100 to 10,000 and, preferably, ranging from 300 to 5,000.

7. Copolyetheramides according to any one of Claims 1 to 6, characterized in that the acid additives employed comprise: among the inorganic oxyacids, sulphurous, sulphuric, hypophosphorous, phosphorous, orthophosphoric or pyrophosphoric acids; among the organic oxyacids, organosulphonic acids, especially methanesulphonic, paratoluenesulphonic or naphthalenesulphonic acids or organophosphonic acids, especially monoalkyl- or monoarylphosphonic acids such as methylphosphonic or benzenephosphonic acids.

8. Copolyetheramides according to Claim 7, characterized in that the acid additives employed comprise acids derived from phosphorus which belong to the group of hypophosphorous, phosphorous, orthophosphoric, pyrophosphoric, methylphosphonic or benzenephosphonic acids.

9. Copolyetheramides according to either of Claims 7 and 8, characterized in that the proportions of strong acid, expressed as percentage by weight relative to the final copolyetheramide, are generally between 0.01 and and preferably between 0.01 and 0.5%.

10. Copolyetheramides according to any one of Claims 1 to 9, characterized in that the proportions by weight of the amide blocks in the final polymer are between 15 and 85% and, preferably, between 40 and 60% and the proportions by weight of the ether blocks are between 85 and 15% and, preferably, between 60 and 40%.

**Claims**

for the contracting state AT

1. Process for preparing homogeneous copolyetheramides having a block structure and possessing, in particular, a melting or softening point equal to at least 170°C, a glass transition temperature, measured at EHO, equal to at most -5°C and a viscosity in the molten state, measured under specified conditions, equal to at least 50 Pa.s, characterized in that the procedure defined by the following points is carried out:

a lactam having from 4 to 12 carbon atoms is mixed with a solution of a salt of a fatty acid dimer and polyoxyalkylenediamine, in a dissolving medium based on a mixture of water and an aliphatic alcohol having fewer than 5 carbon atoms, on a water/alcohol/lactam mixture (the alcohol and the lactam used each corresponding to the definitions given above), on lactam itself in the molten state or alternatively, when the lactam is watersoluble, on a water/lactam mixture;

the stoichiometry of the said salt having been established beforehand by measuring the pH of the solution of the salt in a diluent mixture based on water and at least one compound chosen from an aliphatic alcohol, an aliphatic diol or a lactam (the alcohol and the lactam used each corresponding to the definitions given above and the aliphatic diol containing from 2 to 6 carbon atoms) and by adjusting the composition of the said salt so that the pH attained equals, to ± 0.05 pH unit, the pH value at the equivalence point, it being possible to omit the mixing of the solution of the salt with the lactam when the solution of the salt in the dissolving medium based on a water/alcohol/lactam mixture, on a water/lactam mixture or on lactam itself in the molten state contains sufficient lactam to obtain the copolyrtheramide of desired composition;

there is then added to the reaction mixture a small amount of an additive consisting of an inorganic oxyacid or an organic oxyacid other than a carboxylic acid, at least one of whose acid functions, when there are several of them, possesses an ionization constant pKa in water at 25°C equal to or less than 4, and the whole mixture is then subjected to heating to react the lactam with the salt.

2. Process according to Claim 1, characterized in that the lactam used is ε-caprolactam.

3. Process according to either of Claims 1 and 2, characterized in that the dimeric acids employed are obtained by polymerization and fractionation of compounds comprising 80 to 100% by weight of monomeric fatty acid(s) having from 16 to 20 carbon atoms and 20 to 0% by weight of monomeric fatty acid(s) having from 8 to 15 carbon atoms and/or from 21 to 24 carbon atoms, the said dimeric acids comprising a fraction of difunctional acid which is greater than 94% by weight, a fraction of monofunctional acid which is less than 1% by weight and a fraction of acid of functionality higher than 2 which is less than 5% by weight.

4. Process according to Claim 3, characterized in that the dimeric acids used consist of the species obtained by fractionation of a hydrogenated composition derived from the catalytic polymerization of monomeric fatty acid(s) having 18 carbon atoms.

5. Process according to any one of Claims 1 to 4, characterized in that the polyoxyalkylenediamines used comprise the compounds of general formula:

$H_2N-R_1-(OR_2)_n-OR_3-NH_2$ (I)

in which the symbols $R_1$, $R_2$ and $R_3$, which may be identical or different, denote linear or branched divalent saturated aliphatic radicals containing from 1 to 10 carbon atoms, and the symbol n is a number determined in such a way as to achieve a molecular mass ranging from 100 to 10,000, and preferably ranging from 300 to 5,000.

6. Process according to Claim 5, characterized in that the polyoxyalkylenediamines used comprise polyoxypropylenediamines of formula (I) in which

$$R_1 = R_2 = R_3 = -\overset{\overset{\large CH_3}{|}}{C}H-CH_2,$$

polyoxyethylenediamines of formula (I) in which

$$R_1 = R_3 = -\overset{\overset{\large CH_3}{|}}{C}H-CH_2- \text{ and } R_2 = -CH_2-CH_2-$$

or polyoxytetramethylenediamines of formula (I) in which

$$R_1 = R_3 = -\overset{\overset{\large CH_3}{|}}{C}H-CH_2-$$

and $R_2 = -CH_2-CH_2-CH_2-CH_2-$, these compounds having a molecular mass ranging from 100 to 10,000, and preferably ranging from 300 to 5,000.

7. Process according to any one of Claims 1 to 6, characterized in that the acid additives used comprise: among inorganic oxyacids, sulphurous, sulphuric, hypophosphorous, phosphorous, orthophosphoric or pyrophosphoric acid; among organic oxyacids, organosulphonic acids, especially methanesulphonic, paratoluenesulphonic or naphthalenesulphonic acids, or organophosphonic acids, especially monoalkyl- or monoarylphosphonic acids such as methylphosphonic or benzenephosphonic acid.

8. Process according to Claim 7, characterized in that the acid additives used comprise the acids derived from phosphorus belonging to the group consisting of hypophosphorus, phosphorus, orthophosphoric, pyrophosphoric, methylphosphonic or benzenephosphonic acid.

9. Process according to either of Claims 7 and 8, characterized in that the proportions of strong acid, expressed as a percentage by weight relative to the final copolyetheramide, are generally between 0.01 and 1%, and preferably between 0.01 and 0.5%.

10. Process according to any one of Claims 1 to 9, characterized in that the proportions by weight of amide blocks in the final polymer are between 15 and 85%, and preferably between 40 and 60%, and the proportions by weight of ether blocks are between 85 and 15%, and preferably between 60 and 40%.